# FASCICULE DE BREVET EUROPEEN

(11) **EP 2 182 436 B1**
(45) Date de publication et mention de la délivrance du brevet: **25.05.2016**
(21) Numéro de dépôt: 09173791.6
(22) Date de dépôt: 22.10.2009
(51) Int. Cl.: G06F 9/445

(54) **Carte d'identification d'abonné à un réseau de téléphonie et procédé de commande d'un dispositif électronique apte à interagir avec une telle carte**
Berechtigungskarte eines Abonnenten eines Telefonnetzes und Verfahren zu Steuerung einer elektronischen Vorrichtung, die in der Lage ist, mit dieser Karte zu interagieren
Telephone network subscriber identity card and method for controlling an electronic device capable of interacting with such a card

(30) Priorité: 30.10.2008 FR 0806046
(43) Date de publication de la demande: 05.05.2010
(73) Titulaire: Oberthur Technologies, 92700 Colombes (FR)
(72) Inventeur: Denis, Sylvestre, 78800 Houilles (FR)
(74) Mandataire: Santarelli

(56) Documents cités:
- EP-A1- 1 804 196
- WO-A-00/29945

## Description

L'invention concerne une carte d'identification d'abonné à un réseau de téléphonie et un procédé de commande d'un dispositif électronique apte à interagir avec une telle carte.

Il est connu d'utiliser des cartes d'identification d'abonné à un réseau de téléphonie (par exemple de téléphonie mobile); Ces cartes, généralement réalisées sous forme de carte à microcircuit, détiennent des informations (dont certaines sont secrètes) relatives à l'abonnement à des services fournis par le réseau.

La présence de cette carte au sein d'un dispositif électronique de télécommunication (tel qu'un téléphone portable) permet ainsi à ce dispositif (grâce aux informations contenues dans la carte d'identification) de se connecter au réseau et d'échanger des données avec d'autres dispositifs du réseau, telles que par exemple des données représentatives de la voix d'un interlocuteur et en général chiffrées au moyen d'une clé secrète contenue dans la carte d'identification.

On a par ailleurs déjà proposé que de telles cartes puissent commander (à partir du microprocesseur qu'elles contiennent) la mise en oeuvre de fonctionnalités du dispositif électronique qui les reçoit, comme le permettent les commandes de type SIM Toolkit.

Si cette solution apporte une certaine souplesse dans la conception du fonctionnement de l'ensemble dispositif électronique-carte d'identification, ce fonctionnement dépendant des instructions mises en oeuvre par le dispositif électronique (en pratique par son microprocesseur), en particulier des étapes qui sont mises en oeuvre à l'initialisation du dispositif électronique, étapes qui sont naturellement prépondérantes pour la nature de la suite du fonctionnement de l'ensemble.

On connait déjà, d'après le document EP - 1 804 196 A1, une carte mémoire pour des dispositifs de communication mobile, et plus particulièrement une carte mémoire contenant un bloc d'identification de l'abonné et un bloc de mémoire de masse ; on connait également, d'après le document WO-00/29945 A, un dispositif électronique comportant une carte mémoire amovible comportant un programme à exécution automatique.

Afin d'améliorer cet état de fait et d'apporter encore plus de souplesse à la conception d'un tel système, l'invention propose un procédé selon la revendication 1.

On permet ainsi la mise en oeuvre dans le dispositif électronique du programme provenant de la carte (c'est-à-dire l'exécution des instructions comprises dans ce programme par le microprocesseur du dispositif) dès que ces deux équipements interagissent (par exemple par connexion de la carte au dispositif ou mise sous tension du dispositif intégrant la carte).

L'étape de transfert est réalisée sous condition, supplémentaire à la détection, d'une indication de l'absence de mise en oeuvre préalable de l'étape de transfert, ce qui permet de ne mettre en oeuvre le programme qu'à la première interaction des équipements.

Selon une première possibilité, l'exécution du programme provoque un échange de données entre la carte et le dispositif et participe ainsi aux interactions ultérieures entre les deux équipements.

Selon une autre possibilité, l'exécution du programme participe à l'installation d'un programme informatique dans le dispositif. Cette installation comprend par exemple une connexion à un serveur distant, éventuellement en utilisant le réseau de téléphonie.

L'invention prévoit ainsi également une carte d'identification selon la revendication 6.

D'autres caractéristiques et avantages de l'invention apparaîtront à la lumière de la description qui suit, faite en référence aux dessins annexés dans lesquels :
- la figure 1 représente les éléments principaux d'un téléphone portable participant à la mise en oeuvre de l'invention ;
- la figure 2 représente les éléments principaux d'une carte à microcircuit réalisée selon les enseignements de l'invention ;
- la figure 3 représente un premier exemple d'application envisageable pour les dispositifs des figures 1 et 2 ;
- la figure 4 représente un second exemple d'application de ces dispositifs ;
- la figure 5 représente un procédé envisageable pour la configuration des fonctions associées à des mouvements du dispositif de la figure 1 ;
- les figures 6a et 6b représentent un procédé mis en oeuvre dans un exemple possible de réalisation de l'invention ;
- la figure 7 représente une variante envisageable pour certaines étapes de la figure 6a ;
- la figure 8 représente un procédé éventuellement mis en oeuvre lors de l'initialisation de la carte à microcircuit de la figure 2.

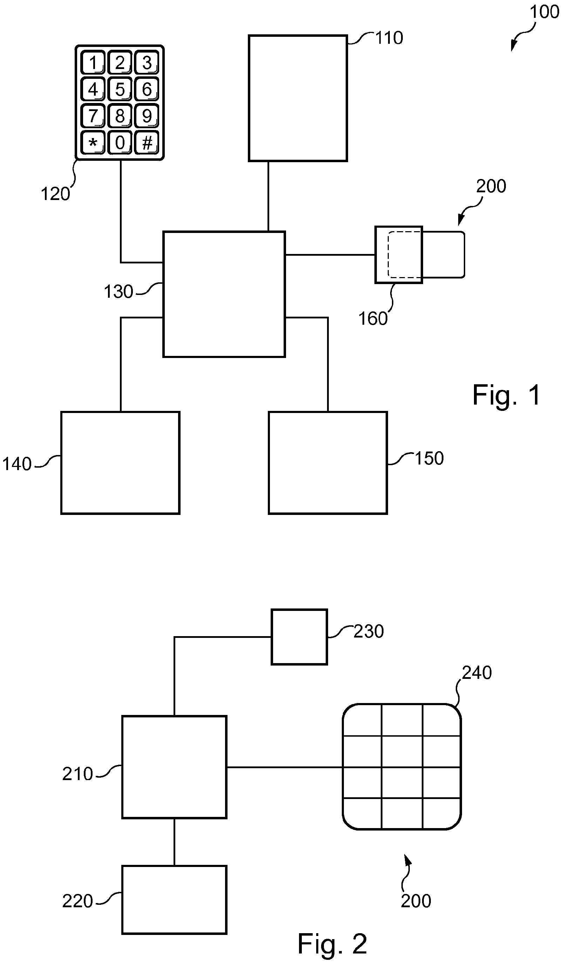

La **figure 1** représente les éléments principaux d'un dispositif électronique de télécommunication (ici précisément un téléphone portable) 100.

Le téléphone portable 100 comprend un microprocesseur 130 auquel est associée une mémoire non volatile 140 (par exemple du type Flash) et une mémoire volatile (ou mémoire RAM) 150.

Le téléphone portable comprend également un clavier 120 et un écran 110 qui forment des moyens d'interface avec un utilisateur du téléphone portable.

Le téléphone portable reçoit enfin une carte à microcircuit 200 (décrite plus en détail dans la suite) apte à échanger des données avec le microprocesseur 130, par exemple ici à travers des moyens de connexion physiques 160. En variante, on pourrait naturellement prévoir d'autres moyens pour échanger des données entre le microcircuit 130 et la carte à microcircuit 200, tels que par exemple des moyens de communication sans fil, éventuellement courte portée.

La **figure 2** représente les éléments principaux de la carte à microcircuit 200.

La carte à microcircuit comprend un microprocesseur 210 associé à une mémoire non volatile 220.

Une interface entrée/sortie 240 (qui comprend notamment des plots destinés à entrer en contact avec des plots correspondant des moyens de connexion 160) permet au microprocesseur 210 de la carte à microcircuit 200 d'interagir avec un équipement extérieur, notamment le microprocesseur 130 du téléphone portable 100 lorsque la carte à microcircuit 200 est montée au contact des moyens de connexion 160.

La carte à microcircuit 200 comprend également un capteur de mouvement 230, ici du type accéléromètre, qui permet d'avoir accès à une composante au moins du mouvement de la carte à microcircuit 200 dans le référentiel terrestre, ici par le biais de l'accélération selon au moins une dimension de la carte à microcircuit.

En variante, le capteur de mouvement 230 pourrait être un gyroscope, apte par exemple à mesurer la vitesse rotationnelle de la carte autour d'un axe. Selon une autre variante, le capteur de mouvement 230 pourrait être remplacé par un capteur de position, tel que par exemple un capteur magnétique apte à déterminer la position de la carte à microcircuit 200 dans le champ magnétique terrestre (voir par exemple à ce sujet la demande de brevet EP 1 731 098).

Plusieurs capteurs de position ou de mouvement peuvent naturellement être utilisés dans la carte à microcircuit 200 sans sortir du cadre de la présente demande de brevet.

Par ailleurs, le capteur de mouvement 230 peut selon un premier type de réalisation envisageable délivrer (ici à l'attention du microprocesseur 210) une information indicative du mouvement détecté à un instant déterminé (que ce soit de manière continue ou en réponse à une requête du microprocesseur 210).

Selon un second type de réalisation envisageable, le capteur de mouvement 230 peut en outre mémoriser une pluralité de valeurs détectées et délivrer ainsi un historique des valeurs (comprenant la pluralité précédemment mentionnée), par exemple avec une période déterminée ou en variante sur requête du microprocesseur 210.

La carte à microcircuit 200 est une carte d'identification d'abonné à un réseau de téléphonie (en particulier de téléphonie mobile), telle qu'une carte SIM (pour "*Subscriber Identity Module*"), une carte USIM (pour "*Universal Subscriber Identity Module*"), ou une carte RUIM (pour "*Removable Universal Identity Module*").

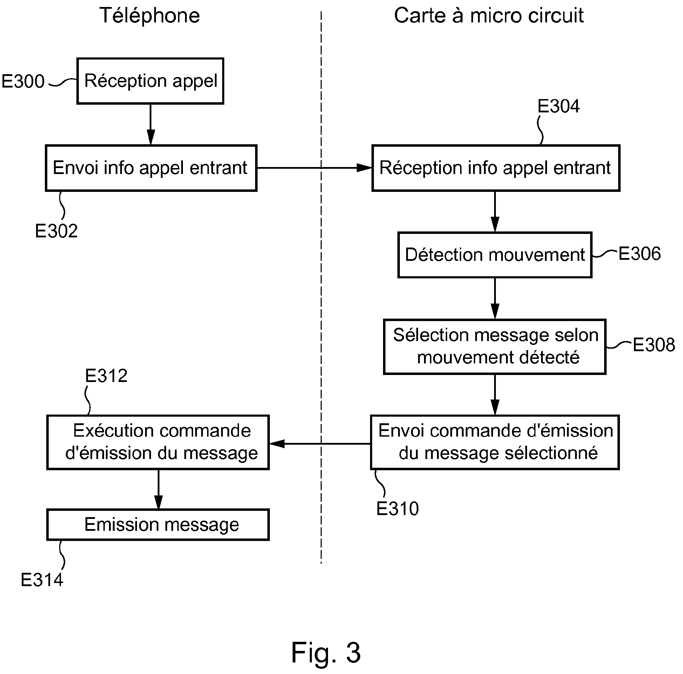

La **figure 3** représente un premier exemple d'application envisageable pour les dispositifs qui viennent d'être mentionnés.

Dans cette application, lorsque le téléphone reçoit une communication en provenance d'un autre dispositif électronique connecté au même réseau de télécommunication (étape E300), il en informe la carte à microcircuit 200 à l'étape E302 (par exemple au moyen d'un événement SIM Toolkit). Le microprocesseur 210 de la carte à microcircuit 200 reçoit alors à l'étape E304 cette information selon laquelle un appel entrant est détecté.

Le microprocesseur 210 procède alors à un algorithme (ou programme) de détection de mouvements à l'étape E306 qui utilise les données issues du capteur 230. Un tel algorithme est par exemple mémorisé dans la mémoire non volatile 220 de la carte à microcircuit 200.

Le microprocesseur 210 émet alors une commande à destination du microprocesseur 130 du téléphone portable 100 qui dépend du type de mouvement détecté.

Par exemple, le microprocesseur 210 sélectionne un message prédéterminé dans la mémoire non volatile 220 en fonction du mouvement détecté à l'étape E306 et envoie une commande, par exemple une commande SIM Toolkit d'envoi du message sélectionné par le réseau de téléphonie mobile, par exemple par SMS (auquel cas la commande SIM Toolkit utilisée est "*SEND SMS*") ou MMS ; en variante, un message vocal peut être envoyé.

Il s'agit par exemple d'un message d'un premier type si deux tapes sur le téléphone sont détectées (détection de deux séries de vibrations de faible amplitude par le capteur) et d'un message d'un second type (ou en variante d'une absence de réaction) en cas de mouvement répété dans une direction puis dans la direction opposée. Les messages d'un premier type et d'un second type et le mouvement auquel chaque type de message est associé sont mémorisés dans la mémoire non-volatile 220.

La commande SIM Toolkit est transmise au microprocesseur 130 du téléphone portable 100 qui la reçoit et l'exécute à l'étape E312, ce qui provoque à l'étape E314 l'émission par le réseau de téléphonie mobile du message préalablement sélectionné en fonction du mouvement détecté par le capteur de mouvement 230 de la carte à microcircuit.

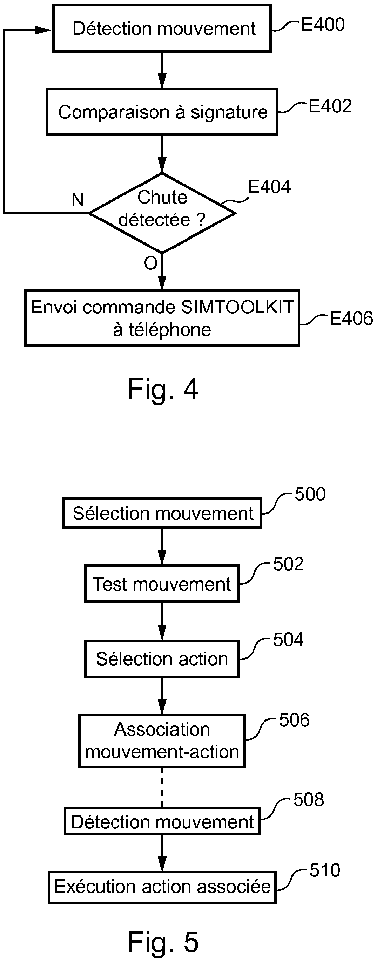

La **figure 4** représente un autre exemple d'application des dispositifs qui viennent d'être décrits.

Dans cette application, le capteur de mouvement 230 détecte en continu à l'étape E400 le mouvement de la carte à microcircuit 200 (et par conséquent également celui du téléphone portable 100 qui porte cette carte à microcircuit 200).

Les valeurs de mouvement détectées sont périodiquement comparées à une signature d'un mouvement de chute (par exemple mémorisée en mémoire non volatile 220). On pourra à ce sujet se référer par exemple à la demande de brevet US 2001/004234.

On détermine alors à l'étape E404 si une chute est détectée (en fonction du résultat de la comparaison de l'étape E402).

Si aucune chute n'est détectée, on continue la détection continue du mouvement à l'étape E400.

En revanche, si une chute est détectée par la comparaison positive des valeurs de mouvement détectées à la signature mémorisée dans la mémoire non volatile 220 (signature qui correspond par exemple à un mouvement de chute d'une personne portant le téléphone), le microprocesseur 210 procède à l'envoi d'une commande destinée au téléphone portable 100 et exécutable par le microprocesseur 130. Il s'agit par exemple d'une fonction SIM Toolkit tel que défini par la norme GSM11.14.

La commande émise par le microprocesseur 210 à destination du microprocesseur 130 (transmise par conséquent à travers l'interface 240 et les moyens de connexion 160) entraîne selon une possibilité envisageable la génération d'un appel par le téléphone portable 100 au moyen du réseau de téléphonie mobile, afin par exemple de prévenir un centre de secours. Une communication avec le porteur du téléphone portable peut être initiée (on utilise alors la commande SIM Toolkit "*SET UP CALL*").

En variante, la commande émise par le processeur 210 pourrait générer l'émission d'un message à travers le réseau de téléphonique mobile (par exemple de type SMS, auquel cas on utilise la commande SIM Toolkit "*SEND SMS*"), le message pouvant notamment inclure l'identité du titulaire de l'abonnement, avec éventuellement d'autres informations (telles que par exemple des informations de localisation du téléphone portable, obtenues soit par le biais de l'identification de la cellule à laquelle est connecté le téléphone portable 100 dans un réseau cellulaire, soit par des moyens de géolocalisation de type GPS par exemple).

On comprend que le téléphone portable émet ainsi un appel ou un message sur la base d'un mouvement détecté par la carte à microcircuit 200, sans que le téléphone portable n'ait en lui-même été au préalable configuré pour effectuer une telle détection.

On remarque que dans les exemples qui viennent d'être décrits, on déduit le mouvement ou la position du téléphone portable 100 à partir des mouvements ou de la position de la carte à microcircuit 200 du fait que ces deux éléments sont physiquement liés.

Il peut toutefois être souhaitable d'indiquer le positionnement de la carte à microcircuit 200 dans le téléphone portable 100 (en particulier si des commandes initiées par mouvement dépendent de l'orientation relative du téléphone portable 100 et de la carte à microcircuit 200). Il s'agit d'une étape de configuration qui pourra naturellement n'être réalisée que lors de la première introduction de la carte à microcircuit 200 dans le téléphone portable 100.

Selon une première possibilité de réalisation, le positionnement de la carte 200 dans le téléphone portable 100 pourra être indiqué par l'utilisateur à l'aide du clavier 120 en réponse à l'affichage d'un menu correspondant au moyen de l'écran 110. Préférentiellement, le menu est mémorisé par la carte à microcircuit 200 (mémoire non volatile 220) et l'affichage par le téléphone est commandé par une commande SIM Toolkit "*SELECT ITEM*" envoyée par la carte 200 au téléphone portable 100.

Selon une seconde possibilité de réalisation, une application est mise en oeuvre par le microprocesseur 210 provoque l'affichage sur l'écran 110 d'un message demandant à l'utilisateur de réaliser un mouvement particulier avec le téléphone portable 100.

La détection par le capteur de mouvement 230 situé dans la carte 200 du mouvement particulier du téléphone 100 réalisé par l'utilisateur permet alors au processeur 210 de déduire l'orientation relative de la carte à microcircuit 200 et du téléphone portable 100.

La **figure 5** représente un procédé envisageable pour la configuration des fonctions associées à des mouvements du téléphone, par exemple en complément de ce qui vient d'être décrit à propos du positionnement de la carte à microcircuit dans le téléphone portable 100.

Ce procédé commence par un affichage d'une représentation des mouvements possibles sur l'écran 110 du téléphone portable 100 et la sélection de l'un de ces mouvements par l'utilisateur au moyen de l'interface (ici du clavier 120) à l'étape E500.

Selon une possibilité envisageable, on peut alors demander à l'utilisateur de réaliser ce mouvement afin d'effectuer un test à l'étape E502 : on pourra alors, en fonction du mouvement effectivement réalisé tel que détecté par le capteur de mouvement 230, afficher des informations permettant à l'utilisateur de s'approcher du mouvement prédéfini, en répétant éventuellement le test de l'étape E502 tant que le mouvement réalisé par l'utilisateur et détecté par le capteur de mouvement 230 n'est pas suffisamment proche du mouvement prédéfini sélectionné à l'étape E500 (par exemple en termes de signature du mouvement).

On demande ensuite à l'utilisateur de sélectionner au moyen de l'interface 110, 120 une action à associer au mouvement sélectionné à l'étape E500 : l'action à associer est typiquement une fonctionnalité mise en oeuvre par le téléphone portable 100, tel que par exemple l'affichage d'un menu, l'appel d'un numéro prédéterminé, l'envoi d'un message (par exemple de type SMS), la connexion au réseau Internet ou la mise en oeuvre de moyens de communication sans fil autres que ceux du réseau de téléphonie (par exemple de type Bluetooth ou WIFI).

Une fois l'action sélectionnée par l'utilisateur, on procède à l'association du mouvement sélectionné à l'étape E500 et de l'action sélectionnée à l'étape E504, par exemple en mémorisant cette association dans la mémoire non volatile 220.

Ainsi, lors d'étapes ultérieures du fonctionnement du téléphone portable 100, si le mouvement (préalablement sélectionné à l'étape E500 par exemple une tape brève sur le téléphone détecté par le capteur 230 comme un mouvement bref de faible amplitude) est détecté par le capteur de mouvement 230 comme représenté à l'étape E508, le microprocesseur 210 demandera la mise en oeuvre (étape E510) par le microprocesseur 130 du téléphone portable 100 de l'action (par exemple, l'affichage d'un menu tel que celui de l'opérateur) associée au mouvement détecté, comme décrit ci-dessus, en utilisant par exemple une commande SIM Toolkit appropriée ("*SELECT ITEM*" dans le cas de l'exemple de l'affichage du menu de l'opérateur précédemment mentionné).

Selon une variante envisageable, les étapes E500 et E502 précitées pourraient être remplacées par l'affichage d'une demande destinée à l'utilisateur de réaliser un mouvement libre et par la détection du mouvement réalisé par l'utilisateur qui sera ainsi ensuite le mouvement associé à l'une des actions envisageables, selon les souhaits de l'utilisateur.

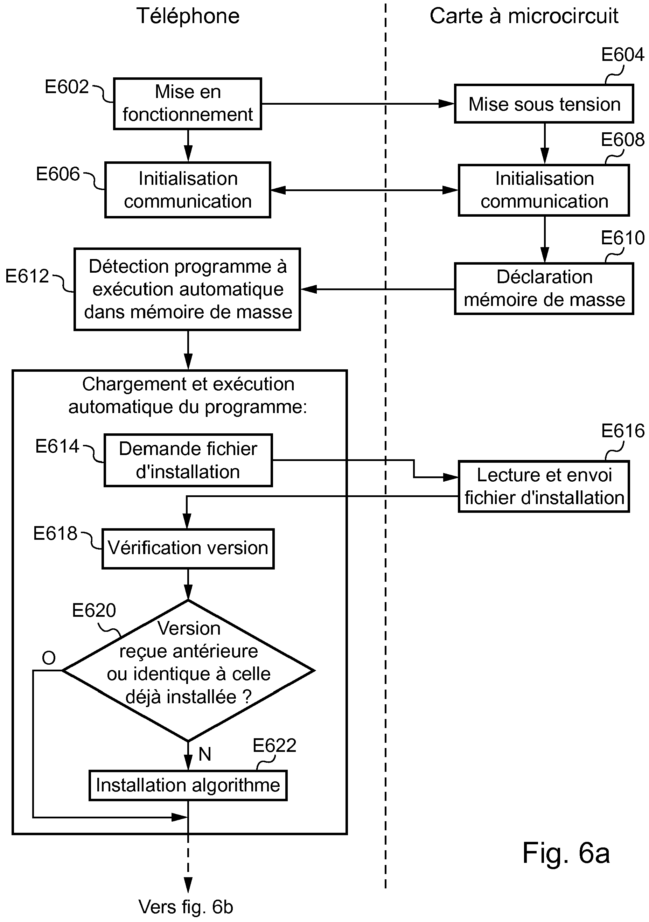

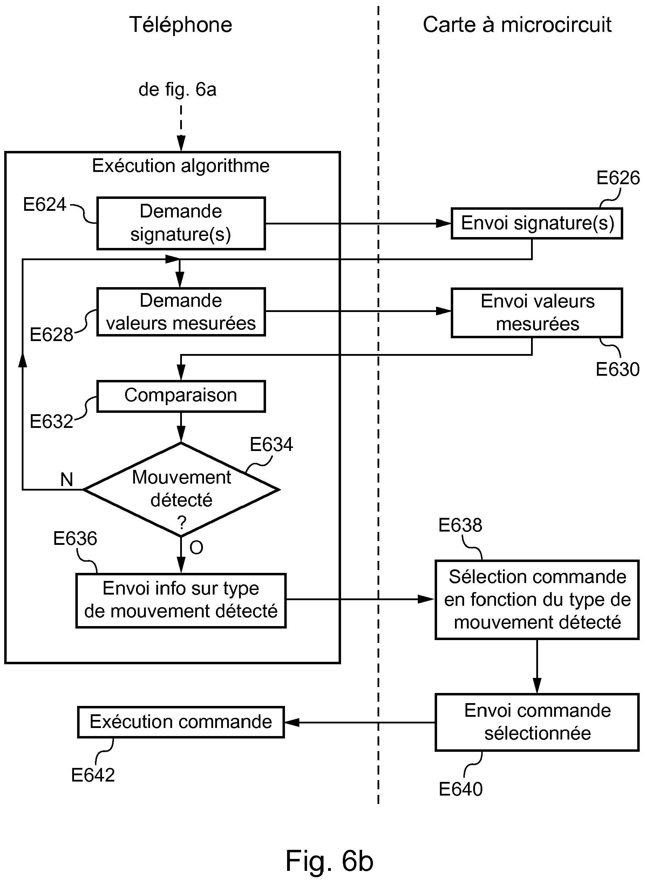

Les **figures 6a** **et** **6b** représentent un procédé mis en oeuvre dans un exemple possible de réalisation dans lequel une partie au moins du traitement des signaux issus du capteur de mouvement ou de position 230 est réalisée par le microprocesseur 130 du téléphone 100.

Dans ce procédé, l'utilisateur met par exemple en fonctionnement le téléphone à l'étape E602 ce qui provoque la mise sous tension de la carte à microcircuit à l'étape E604 et l'initialisation d'une communication entre ces deux entités (étapes E606 et E608) selon les protocoles ISO7816 et USB (la carte à microcircuit 200 possédant des contacts adaptés pour communiquer selon ces deux types de protocole conformément à la norme ISO7816-12).

La carte à microcircuit 200 déclare alors une partie au moins de la mémoire non volatile 220 comme mémoire de masse (ici selon le protocole USB) à l'étape E610. La mémoire de masse déclarée contient un programme de type "*autorun*", destiné à être exécuté automatiquement par le processeur auquel se connecte cette mémoire de masse.

Ainsi, le microprocesseur 130 du téléphone portable 100 détecte ce programme à exécution automatique à l'étape E612 et charge dans sa mémoire volatile 150 (en provenance de la mémoire de masse déclarée à l'étape E610) et exécute le programme à lancement automatique, ce qui provoque la mise en oeuvre des étapes E614 à E622 décrites à présent.

A l'étape E614, le programme à lancement automatique émet à destination de la carte à microcircuit 200 une demande de fichier d'installation d'un algorithme de traitement des données du capteur de mouvement.

La carte à microcircuit lit dans sa mémoire non volatile et envoie à l'étape E616 à destination du téléphone portable le fichier d'installation demandé.

Le microprocesseur 130 vérifie alors la version du fichier d'installation reçu et la compare à la version d'un fichier du même type précédemment installé à l'étape E620.

Si un fichier du même type a déjà été installé et que la version qui vient d'être reçue de la carte à microcircuit est antérieure ou la même que la version déjà installée, on ne procédera pas à l'étape E622.

Dans les autres cas, on procède à l'étape E622 à l'installation de l'algorithme de traitement au moyen des fichiers reçus à l'étape E616.

L'algorithme de traitement qui vient d'être installé comme expliqué ci-dessus peut alors être mis en oeuvre à un moment ultérieur du fonctionnement du téléphone portable 100, par exemple en tant que tâche de fond.

Dans l'exemple décrit ici, cet algorithme comprend notamment une étape E624 à laquelle il demande des signatures de mouvement mémorisées dans la carte à microcircuit 200 (précisément dans la mémoire non volatile 220).

La carte à microcircuit 200 envoie les signatures demandées à l'étape E626.

L'algorithme de traitement comprend également une étape E628 de demande à la carte à microcircuit 200 de valeurs représentatives du mouvement ou de la position du téléphone portable détecté par le capteur de mouvement ou de position 230.

On remarque sur ce point que les demandes de l'étape E624 et de l'étape E628 sont par exemple réalisées sous la forme d'une commande APDU.

Les valeurs mesurées sont envoyées au téléphone 100 à l'étape E630.

L'algorithme de traitement comprend une étape de comparaison E632 à laquelle sont comparées les dernières valeurs mesurées et reçues par le téléphone portable à (ou aux) signature(s) de mouvement de manière à déterminer à l'étape E634 si un mouvement particulier est détecté.

Dans la négative, l'algorithme de traitement retourne à l'étape E628 (mise en oeuvre périodiquement) où de nouvelles valeurs mesurées par le capteur 230 sont demandées à l'aide d'une commande APDU.

Si un mouvement d'un type particulier est au contraire détecté à l'étape E634, l'algorithme de traitement émet à l'étape E636 une information indicative du type de mouvement détecté à destination du microprocesseur 210 de la carte à microcircuit 200.

A réception de cette information, le microprocesseur 210 sélectionne une commande en fonction du type de mouvement détecté comme cela a été décrit plus haut (étape E638).

La commande sélectionnée est envoyée par le microprocesseur 210 au microprocesseur 130 du téléphone portable 100 (par exemple sous forme d'une commande SIM Toolkit).

Le microprocesseur 130 reçoit la commande sélectionnée et l'exécute à l'étape E642.

Le procédé qui vient d'être décrit permet de réaliser une partie du traitement, en particulier une partie consommatrice des ressources mémoire et processeur, au sein du téléphone portable 100 afin d'alléger la charge du traitement découlant de la présence du capteur de mouvement ou de position 230 dans la carte à microcircuit 200.

Toutefois, grâce à l'installation automatique de l'algorithme de traitement comme également décrit ci-dessus, la solution peut être mise en oeuvre dans un téléphone portable non spécialement préparé à cet effet.

Comme déjà indiqué, la totalité du traitement des données issues du capteur de mouvement et de la détermination des actions (ou fonctions du téléphone) à mettre en oeuvre en conséquence du mouvement détecté pourrait être réalisée au moyen de l'algorithme installé dans le téléphone. Dans ce contexte, cet algorithme pourrait toutefois avoir recours à des données mémorisées dans la carte à microcircuit, telles que par exemple des données descriptives de l'association entre mouvements et actions correspondantes mémorisées dans la mémoire non volatile 220 de la carte à microcircuit 200.

On comprend par ailleurs que l'utilisation du lancement automatique du programme, en vue par exemple de l'installation d'un algorithme, n'est pas nécessairement limitée au contexte dans lequel est réalisée la présente description.

D'autres applications sont ainsi envisageables, telles que par exemple dans le cas où le capteur de mouvement 230 est remplacé par des moyens de géolocalisation, par exemple un récepteur GPS).

L'algorithme installé dans le téléphone portable 100 peut alors par exemple émettre, à destination du microprocesseur 210 de la carte 200, une demande de la position déterminée par le récepteur GPS. Le microprocesseur 210 échange alors des données avec le récepteur GPS afin de connaître la position détectée et répond au microprocesseur 130 du téléphone portable 100 en lui transmettant des données représentatives de la position détectée.

Le microprocesseur 110 (par exemple toujours sous la commande de l'algorithme installé) peut ainsi utiliser les données de position reçues, par exemple en lisant dans une base de données (mémorisée dans la mémoire non volatile 220 de la carte à microcircuit 200 ou dans une mémoire du téléphone portable 100) des informations associées à la position détectée (telles que par exemple un message publicitaire ou une liste des sites d'intérêt dans le secteur géographique associé à la position détectée), et afficher ces informations sur l'écran 110 du téléphone portable 100.

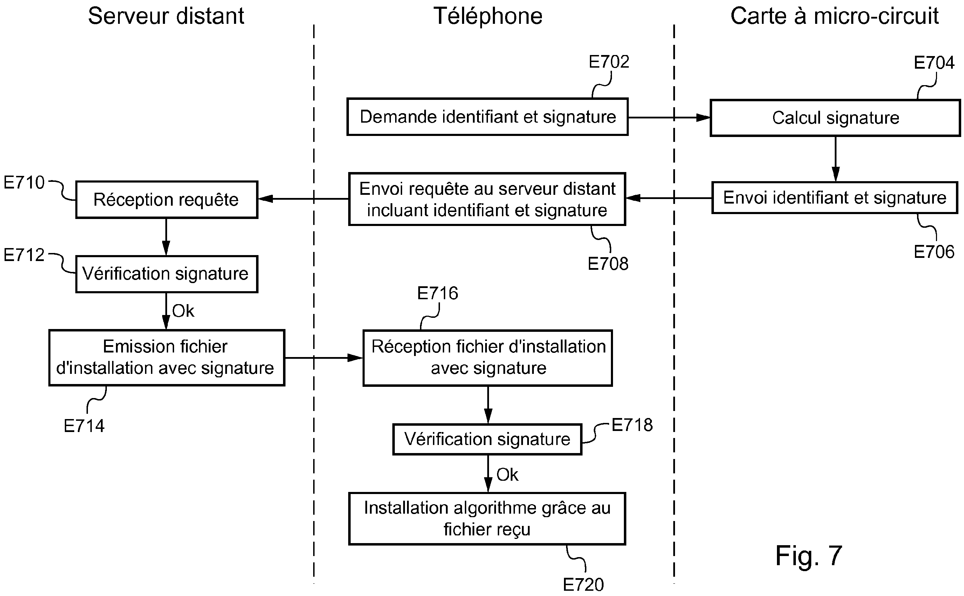

La **figure 7** représente une variante envisageable pour les étapes E614 et E622 de la figure 6a.

Les étapes de ce procédé mises en oeuvre au sein du téléphone (à savoir les étapes E702, E708, E716, E718 et E720) sont réalisées au sein d'un programme à exécution automatique présent sur la carte à microcircuit et automatiquement chargé et exécuté dans le téléphone comme déjà décrit à propos de la figure 6a (et on ne reviendra donc pas en détail sur les étapes antérieures équivalentes aux étapes E602 à E612 de la figure 6a).

A l'étape E702, le programme à exécution automatique provoque l'émission d'une requête par le processeur 130 du téléphone 100 à destination de la carte à microcircuit 200 afin que celle-ci communique un identifiant de l'abonné et une signature associée.

La carte à microcircuit effectue ainsi à l'étape E704 le calcul de la signature cryptographique associée à l'identifiant de l'abonné (par exemple à l'aide d'une clé privée mémorisée dans la carte à microcircuit).

La carte à microcircuit envoie ensuite à l'étape E706 l'identifiant et la signature cryptographique à destination du téléphone 100.

Le téléphone peut ainsi émettre une requête incluant l'identifiant à la signature à destination d'un serveur distant à l'étape E708.

La connexion au serveur distant est par exemple réalisée en utilisant les moyens de connexion du téléphone portable 100 au réseau de téléphonie (ainsi par exemple la communication avec le serveur distant peut se faire à travers le réseau de téléphonie puis le réseau Internet).

Pour ce faire, le programme à exécution automatique mis en oeuvre par le téléphone comprend une adresse de connexion au serveur distant. (En variante, cette adresse pourrait être mémorisée au sein de la carte à microcircuit et obtenue par requête du téléphone à la carte à microcircuit).

Selon une variante envisageable pour les étapes E702 à E708, le programme automatiquement chargé de la carte à microcircuit au téléphone pourrait inclure l'identifiant et la signature cryptographique de la carte à microcircuit, auquel cas il ne serait pas nécessaire de procéder aux étapes E702 à E706.

Suite à l'étape E708, le serveur distant reçoit la requête à l'étape E710 et peut ainsi vérifier la signature cryptographique reçue à l'étape E712 par exemple au moyen de la clé publique associée à la clé privée de la carte.

On pourrait naturellement envisager d'autres moyens d'authentification de la carte à microcircuit génératrice de l'initialisation du processus décrit ici que la signature, auquel cas l'étape E712 consisterait à la vérification de l'authenticité de l'émetteur de la requête.

Lorsque la signature est vérifiée, on procède à l'étape E714 à laquelle le serveur distant émet un fichier d'installation avec une signature associée (ou autre moyen d'authentification), le fichier d'installation pouvant éventuellement être sélectionné parmi une pluralité de fichiers d'installation possibles en fonction de l'identifiant reçu à l'étape E710.

Naturellement, si la signature n'est pas vérifiée correctement à l'étape E712, il est mis fin au procédé et on ne met en oeuvre l'étape E714.

Dans le cas où l'étape E714 a été réalisée, le téléphone reçoit à l'étape E716 le fichier d'informations et la signature associée.

Le téléphone (précisément le microprocesseur 130) peut alors vérifier la signature (ou autre moyen d'authentification) à l'étape E718 ce qui permet de contrôler la légitimité et/ou l'intégrité des applications qui sont chargées dans le téléphone.

En cas de vérification positive, un algorithme de traitement des valeurs issues du capteur de mouvement ou de position est installé dans le téléphone 100 à l'aide du fichier d'installation reçu à l'étape E716.

Cet algorithme peut alors être mis en oeuvre, par exemple en tâche de fond, comme décrit sur la figure 6b aux étapes E624 et suivantes.

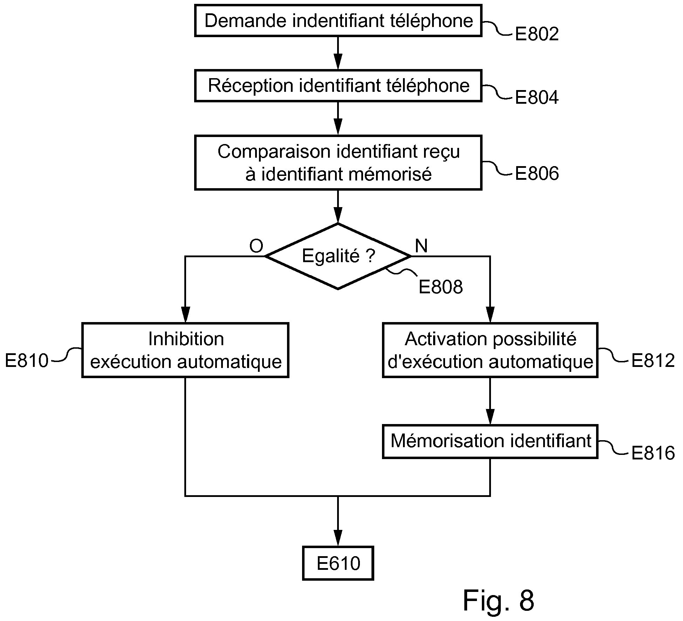

On a représenté à la **figure 8** un procédé éventuellement mis en oeuvre lors de l'initialisation de la carte à microcircuit 200 (comme décrit à propos de la communication à l'étape E608 en figure 6) afin de déterminer s'il s'agit de la première utilisation de la carte à microcircuit dans le téléphone et d'inhiber l'exécution automatique du programme d'installation comme décrit ci-dessus dans la négative.

Ce procédé débute à l'étape E802 par la demande d'un identifiant du téléphone à partir de la carte à microcircuit par exemple en utilisant la commande SIM Toolkit "*Provide Local Information*" avec l'option "*IMEI*" qui permet à la carte à microcircuit d'obtenir l'identifiant unique IMEI (pour "*International Mobile Equipment Identifier*") du téléphone 100.

La carte à microcircuit 200 reçoit alors en réponse cet identifiant à l'étape E804 et compare à l'étape E806 l'identifiant reçu à un identifiant préalablement mémorisé lors des précédentes mises en oeuvre du procédé (voir l'étape E816 décrite plus bas à ce sujet).

En cas d'égalité des identifiants (cf. étape E808), on procède (étape E810) à l'inhibition de l'exécution automatique du programme mentionné dans la description relative aux figures 6a et 7 : l'inhibition est par exemple réalisée en modifiant le nom du fichier d'exécution automatique afin qu'il ne soit plus nommé en tant que fichier à lancement automatique. En variante, on pourrait également déplacer le fichier ou modifier ses attributs de sorte qu'il soit considéré comme un fichier caché et ne soit donc pas automatiquement exécuté. Selon une autre variante encore, on pourrait simplement supprimer le fichier.

En l'absence d'égalité à l'étape E808 (auquel cas on considère qu'il s'agit de la première mise sous tension du téléphone portable avec la carte à microcircuit considérée), on passe à l'étape E812 à laquelle on active la possibilité d'exécution automatique du programme : selon la variante prévue pour son inhibition, l'activation de la possibilité d'exécution automatique pourra consister à rétablir le nom du fichier sous sa forme impliquant un lancement automatique, à déplacer le fichier dans un répertoire permettant son exécution automatique, à modifier son attribut de manière à ce qu'il ne soit plus considéré comme un fichier caché ou à réinstaller le fichier à lancement automatique (s'il a été précédemment effacé), si nécessaire au moyen d'une connexion à distance utilisant les moyens de communication du téléphone portable 100, par exemple en émettant à destination d'un serveur distant une requête pour obtenir le fichier concerné comprenant un identifiant de la carte à microcircuit).

Une fois la possibilité d'exécution automatique activée à l'étape E812, on mémorise à l'étape E816 l'identifiant reçu à l'étape E804 afin d'indiquer pour d'éventuelles mises sous tension ultérieures qu'une première mise sous tension du téléphone portable 100 avec la carte à microcircuit 200 a déjà été réalisée.

Dans tous les cas, les étapes E810 et E816 sont par exemple suivies de l'étape E610 décrite en référence à la figure 6a.

Les modes de réalisation qui précèdent ne sont que des exemples possibles de mise en oeuvre de l'invention qui ne s'y limite pas. On comprend par mouvement l'évolution dans l'espace de l'objet concerné au cours du temps ; un mouvement pourra donc être formé de plusieurs mouvements élémentaires (effectués en général par l'utilisateur).

## Revendications

1. Procédé de commande d'un dispositif électronique (100) comportant un microprocesseur (130) apte à interagir avec une carte d'identification d'abonné à un réseau de téléphonie (200) comportant un microprocesseur (210) associé à une mémoire non-volatile (220) contenant un programme à exécution automatique exécutable par le dispositif électronique, comprenant les étapes suivantes :
- Détection (E602-E608) par le microprocesseur de la carte d'un début d'interaction entre la carte et le dispositif et déclaration (E610) par ce microprocesseur de la carte d'une partie au moins de la mémoire non volatile de la carte, qui contient ledit programme à exécution automatique comme mémoire de masse ;
- Détection (E612) de ce programme à exécution automatique par le microprocesseur du dispositif électronique et commande (E616) de transfert, depuis la carte vers le dispositif, dudit programme sous condition au moins de ladite détection ;
- Exécution par le microprocesseur du dispositif électronique du programme à exécution automatique transféré, **caractérisé par** une étape de vérification incluant :
- la réception (E804) par la carte à microcircuit d'un identifiant du dispositif électronique ;
- la comparaison (E806) de l'identifiant reçu à un identifiant mémorisé dans la carte et relatif à un dispositif électronique vers lequel l'étape de transfert a été préalablement réalisée ;
- l'inhibition (E810) de l'exécution automatique du programme en cas d'égalité des identifiants ou, sinon, l'activation (E812) de la possibilité d'exécution dudit programme et la mémorisation (E816) dans la carte de l'identifiant du dispositif électronique.

2. Procédé selon la revendication 1, dans lequel l'exécution du programme provoque un échange de données entre la carte et le dispositif.

3. Procédé selon la revendication 1, dans lequel l'exécution du programme participe à l'installation d'un programme informatique dans le dispositif.

4. Procédé selon la revendication 3, dans lequel ladite installation comprend une connexion à un serveur distant.

5. Procédé selon la revendication 4, dans lequel la connexion à un serveur distant utilise le réseau de téléphonie.

6. Carte d'identification d'abonné à un réseau de téléphonie (200) comprenant un microprocesseur (210) et une mémoire non volatile (220) contenant un programme à exécution automatique exécutable par un dispositif électronique (100) et :
- des moyens d'interaction avec le microprocesseur (130) du dispositif électronique et de détection d'un début d'interaction avec ce dispositif électronique ;
- des moyens de déclaration (E610) d'une partie au moins de la mémoire non-volatile de la carte comme mémoire de masse ;
**caractérisé par** :
- des moyens de réception (E804) d'un identifiant du dispositif électronique ;
- des moyens de comparaison (E806) de l'identifiant reçu à un identifiant mémorisé dans la carte et relatif à un dispositif électronique ;
- des moyens d'inhibition (E810) de l'exécution automatique du programme en cas d'égalité des identifiants ;
- des moyens d'activation (E812) de la possibilité d'exécution dudit programme en cas d'inégalité des identifiants et de mémorisation (E816) dans la carte de l'identifiant du dispositif électronique.

7. Carte d'identification selon la revendication 6, dans laquelle le programme est apte à mettre en oeuvre une étape d'installation d'un programme informatique dans le dispositif.

## Patentansprüche

1. Verfahren zur Steuerung einer elektronischen Vorrichtung (100), umfassend einen Mikroprozessor (130), der geeignet ist, mit einer Berechtigungskarte eines Abonnenten eines Telefonnetzes (200) zu interagieren, die einen Mikroprozessor (210) aufweist, der mit einem nichtflüchtigen Speicher (220) verbunden ist, der ein Programm mit automatischer Ausführung aufweist, das durch die elektronische Vorrichtung ausführbar ist, das die folgenden Schritte aufweist:
- Ermitteln (E602-E608) durch den Mikroprozessor der Karte eines Beginns einer Interaktion zwischen der Karte und der Vorrichtung und Erklären (E610) durch diesen Mikroprozessor der Karte von mindestens einem Teil des nichtflüchtigen Speichers der Karte, der das Programm mit automatischer Ausführung aufweist, als Massenspeicher;
- Ermitteln (E612) dieses Programms mit automatischer Ausführung durch den Mikroprozessor der elektronischen Vorrichtung und Befehlen (E616) des Übertragens des Programms von der Karte zu der Vorrichtung mindestens unter der Bedingung des Ermittelns;
- Ausführen des übertragenen Programms mit automatischer Ausführung durch den Mikroprozessor der elektronischen Vorrichtung,
**gekennzeichnet durch** einen Schritt des Überprüfens, umfassend:
- das Empfangen (E804) **durch** die Mikroschaltungskarte einer Kennung der elektronischen Vorrichtung;
- das Vergleichen (E806) der empfangenen Kennung mit einer Kennung, die in der Karte gespeichert ist und sich auf eine elektronische Vorrichtung bezieht, zu der der Schritt des Übertragens zuvor durchgeführt worden ist;
- das Hemmen (E810) der automatischen Ausführung des Programms im Falle der Gleichheit der Kennungen oder anderenfalls das Aktivieren (E812) der Möglichkeit des Ausführens des Programms und das Speichern (E816) der Kennung der elektronischen Vorrichtung in der Karte.

2. Verfahren nach Anspruch 1, wobei das Ausführen des Programms einen Austausch von Daten zwischen der Karte und der Vorrichtung bewirkt.

3. Verfahren nach Anspruch 1, wobei das Ausführen des Programms an der Installation eines Computerprogramms auf der Vorrichtung teilnimmt.

4. Verfahren nach Anspruch 3, wobei die Installation eine Verbindung zu einem Remote-Server aufweist.

5. Verfahren nach Anspruch 4, wobei die Verbindung zu einem Remote-Server das Telefonnetz verwendet.

6. Berechtigungskarte eines Abonnenten eines Telefonnetzes (200), umfassend einen Mikroprozessor (210) und einen nichtflüchtigen Speicher (220), der ein Programm mit automatischer Ausführung aufweist, das durch die elektronische Vorrichtung (100) ausführbar ist, und:
- Mittel zur Interaktion mit dem Mikroprozessor (130) der elektronischen Vorrichtung und zum Ermitteln eines Beginns einer Interaktion mit dieser elektronischen Vorrichtung;
- Mittel zum Erklären (E610) von mindestens einem Teil des nichtflüchtigen Speichers der Karte als Massenspeicher;
**gekennzeichnet durch**:
- Mittel zum Empfangen (E804) einer Kennung der elektronischen Vorrichtung;
- Mittel zum Vergleichen (E806) der empfangenen Kennung mit einer Kennung, die in der Karte gespeichert ist und sich auf eine elektronische Vorrichtung bezieht;
- Mittel zum Hemmen (E810) der automatischen Ausführung des Programms im Falle der Gleichheit der Kennungen;
- Mittel zum Aktivieren (E812) der Möglichkeit des Ausführens des Programms im Falle der Ungleichheit der Kennungen und zum Speichern (E816) der Kennung der elektronischen Vorrichtung in der Karte.

7. Berechtigungskarte nach Anspruch 6, wobei das Programm geeignet ist, einen Schritt der Installation eines Computerprogramms auf der Vorrichtung umzusetzen.

## Claims

1. Method of controlling an electronic device (100) comprising a microprocessor (130) adapted to interact with a telephone network subscriber identity card (200) comprising a microprocessor (210) associated with a non-volatile memory (220) containing an autorun program that may be executed by the electronic device, comprising the following steps:
- detection (E602-E608), by the microprocessor of the card, of a start of interaction between the card and the device and declaration (E610), by this microprocessor of the card, of at least part of the non-volatile memory of the card, which contains said autorun program, to be a backing store;
- detection (E612) of this autorun program by the microprocessor of the electronic device and command (E616) to transfer said program from the card to the device, subject to the condition, at least, of said detection;
- execution of the transferred autorun program by the microprocessor of the electronic device, **characterized by** a verification step including:
- reception (E804), by the microcircuit card, of an identifier of the electronic device;
- comparison (E806) of the identifier received to an identifier stored in the card and relating to an electronic device to which the transfer step has already been effected;
- inhibition (E810) of the automatic execution of the program if the identifiers are equal or, if not, activation (E812) of the option of executing said program and storage (E816), in the card, of the identifier of the electronic device.

2. Method according to Claim 1, in which the execution of the program instigates an exchange of data between the card and the device.

3. Method according to Claim 1, in which the execution of the program is part of the installation of a data processing program in the device.

4. Method according to Claim 3, in which said installation comprises connection to a remote server.

5. Method according to Claim 4, in which the connection to a remote server uses the telephone network.

6. Telephone network subscriber identity card (200) comprising a microprocessor (210) and a non-volatile memory (220) containing an autorun program that may be executed by an electronic device (100) and:
- means for interacting with the microprocessor (130) of the electronic device and for detecting a start of interaction with this electronic device;
- means for declaring (E610) at least part of the non-volatile memory of the card to be a backing store;
**characterized by**:
- means for receiving (E804) an identifier of the electronic device;
- means for comparing (E806) the identifier received to an identifier stored in the card and relating to an electronic device;
- means for inhibiting (E810) the automatic execution of the program if the identifiers are equal;
- means for activating (E812) the option of executing said program if the identifiers are not equal and for storing (E816), in the card, the identifier of the electronic device.

7. Identity card according to Claim 6, in which the program is adapted to implement a step of installing a data processing program in the device.
